# EUROPEAN PATENT SPECIFICATION

(11) **EP 2 241 987 B1**
(45) Date of publication and mention of the grant of the patent: **24.03.2021**
(21) Application number: 10153236.4
(22) Date of filing: 10.02.2010
(51) Int. Cl.: G06F 16/16

(54) **Method and system for safely deleting information from a computer**
Verfahren und System zur sicheren Löschung von Informationen aus einem Computer
Procédé et système pour la suppression sécurisée d'informations d'un ordinateur

(30) Priority: 25.02.2009 US 155194 P
(43) Date of publication of application: 20.10.2010
(73) Proprietor: Comodo Security Solutions, Inc., Jersey City, NJ 07310 (US)
(72) Inventor: Ciubotaru, Andrei, Iasi (RO)
(74) Representative: Appleyard Lees IP LLP

(56) References cited:
- EP-A2- 1 736 874
- WO-A1-00/72200
- WO-A1-01/01252
- US-A1- 2005 138 468
- US-A1- 2005 240 756
- US-A1- 2008 120 350
- US-A1- 2008 183 802
- US-B1- 6 560 719
- WIKIPEDIA: "File deletion", INTERNET CITATION, 3 May 2005 (2005-05-03), pages 1-2, XP002509907, Retrieved from the Internet: URL:http://en.wikipedia.org/w/index.php?ti tle=File_deletion&oldid=16997125 [retrieved on 2009-01-07]

## Description

### BACKGROUND

Users will often want to delete files from their computer to save space or improve performance. However, deleting files and registry entries can be risky. Deleting important system files or registry entries causes problems with the operating system or installed programs. Often users accidentally delete a file only to find out later that the file was vital to their computer's normal operating condition, leading to long support hours and high cost repairs.

Thus, users need a way to safely delete files from their computer and restore their computer's operation if a critical file is accidentally deleted.

WO 01/01252 discloses a system and method for protecting shared system files enhances system stability by preventing system files shared by applications, such as DLL files, from being overwritten with invalid files during installation or update of applications or by user actions. A monitoring component monitors changes to the system files. When the monitoring component detects that a protected system file is being changed, it saves a copy of the original file and informs a file protection service of the change. The file protection service checks the modified file to determine whether it is valid. If the modified file is invalid, the system file is restored to its original contents using the copy saved by the monitoring component. Unauthorised importation of system files by application installers or update packages is prevented by requiring the use of a certificate issued by a party with proper authority.

WO 00/72200 discloses a method and apparatus for securing files.

### SUMMARY

The disclosed invention is a method and system for protecting a machine, as defined by the appended independent claims.

### BRIEF DESCRIPTION OF THE FIGURES

FIG 1 is a flowchart of an embodiment of the invention.
FIG 2 is representation of the elements of the first embodiment.
FIG 3 is a flowchart of a how the invention works on restart.
FIG 4 is a flowchart of the response taken to a critical error.
FIG 5 is a flowchart of an embodiment, which does not form part of the invention, of responding to a critical error.
FIG 6 is a flowchart of an example, which does not form part of the invention, related to accidental deletion of email files.
FIG 7 is a depiction of the example described in FIG 6.
FIG 8 is an example, which does not form part of the invention, of a continuous cycle of deleting files and restoring a system to a pre-deletion state.

### DETAILED DESCRIPTION

As used herein, a file system filter (FS Filter) is either an application or API that overlays the file system and intercepts messages sent to the file system, typically from a user. Typically, an FS Filter is a driver used solely to intercept messages and is accessed when a separate application utilizes the API functions. However, the FS Filter and application could be a single piece of software running on the machine. Anytime, this invention refers to the FS Filter, it is understood that FS Filter could refer to a separate application with an accompanying FS Filter driver, one or more applications running on the machine utilizing the FS Filter driver of an operating system, or a single application the has an file system filter driver built in. The FS Filter can also apply to the registry and intercept messages sent to modify, add, or delete registry keys.

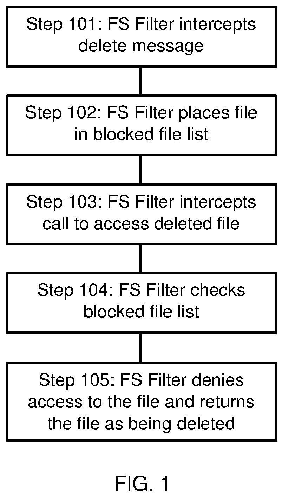

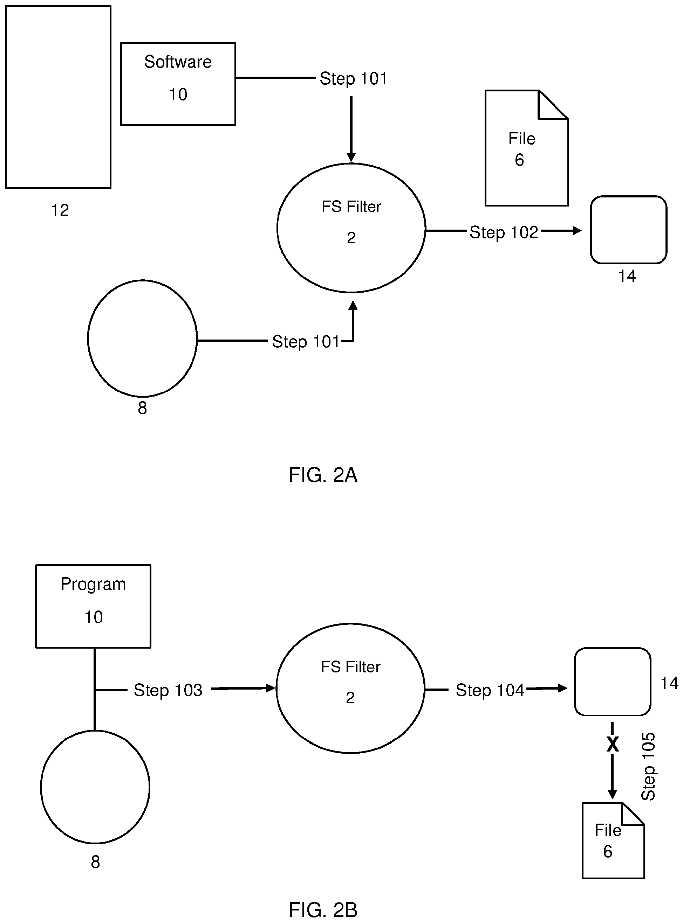

In step 101 of Fig 1 and Fig 2, the FS Filter 2 intercepts a command to delete a file 6. The command can be sent from the user 8 or software 10 running on the machine 12 or on a server, such as security software. The command from security software might be in response to a possible virus being detected on the system protected by the invention. In step 102, instead of deleting the file 6, the FS Filter 2 (or an application interacting with the FS Filter) makes the selected file 6 inaccessible. The file 6 appears deleted to the user 8 and other software 10 running on the machine 12 but remains on the harddrive of the machine. A machine could be a computer, server, PDA, phone, or other electronic device where files could be deleted. A file can be a registry entry, database, executable, document, DLL, or other location where information or code is stored on the machine.

The file 6 is made inaccessible by listing the file 6 in a blocked file list 14. In Step 103, when a separate program 14 (including the operating system) or when the user 8 tries to access the file 6, the FS Filter 2 intercepts the access command and, in step 104, checks to see if the file is part of the blocked file list 14. In step 105, if the file 7 is found on the blocked file list 14, then the FS Filter 2 blocks access to the file 6, making the file appear to be completely removed. To ensure that the user is not confused about whether a file is deleted or not, on start up of the machine 12, the operating system or other software running on the machine reads the contents of the blocked file list 14 into memory and hides each file listed on the blocked file list 14 from the user 8.

The FS Filter 2 blocks access to files in the blocked file list 14 by monitoring each request made for a file. If the requested file is found in the blocked file list 14, the FS Filter 2 returns a message that the file has been deleted or is missing. If the file is not found in the blocked file list 14, the FS Filter 2 allows the request to proceed and the file is processed in the typical manner. The FS Filter can keep the blocked file list in memory or can check the blocked file list using standard database lookup routines each time a file is accessed.

If problems occurs after the file 6 is deleted, the deleted file 6 can be restored to its original state. The deleted file 6 can be restored manually by the user 8 by asking the user to select files in the blocked file list 14 to restore.

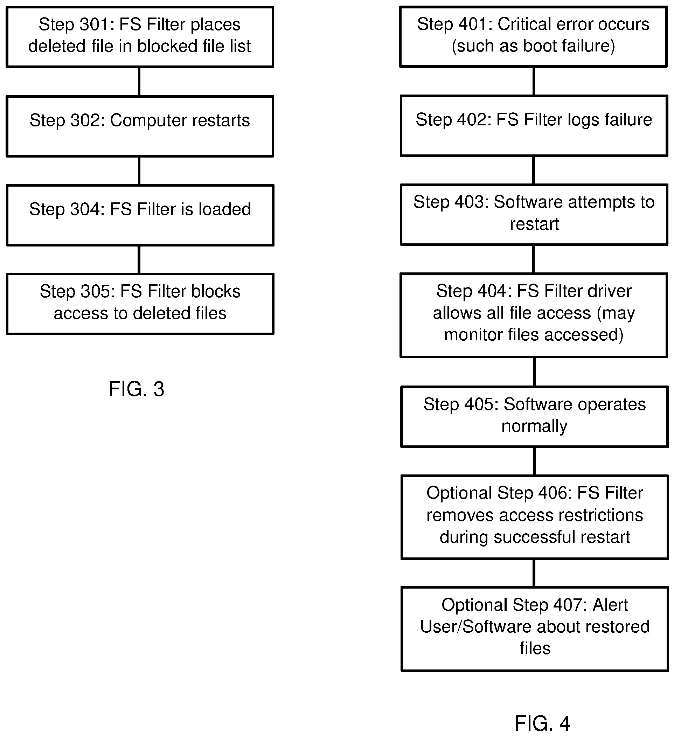

As shown in Fig. 4, the FS Filter 2 monitors which files are accessed during the machine's 12 operation or boot up process. In step 401, a critical error occurs. In step 402, the failure is logged by the FS Filter 2. In step 403, the software experiencing the critical failure (i.e. the operating system during boot up) restarts. The FS Filter 2 checks its logs and notes that a critical failure occurred with the restarted software. In step 404, during the restart, the FS Filter 2 allows complete access to the files in the blocked file list 14. While the software restarts, the FS Filter 2 monitors which files are accessed that are also listed on the blocked file list 14. In steps 405 and 406, once the software successfully restarts into a normal operating condition, the FS Filter 2 removes the files accessed during the restart from the blocked file list 14.

In an embodiment which does not form part of the invention, if the machine 12 fails to start or if a critical event is logged on the machine, then the FS Filter 2 can determine which file in the file blocked list 14 was the last file accessed or that resulted in an error. The FS Filter 2 then restores the file that was last accessed to full functionality by removing the deleted file from the blocked file list 14, allowing the file 6 to be accessed by the user 8. The user 8 is warned that the deleted file 6 was restored to the machine 12 because of an error in the machine's operation. The user 8 can then take the appropriate actions to resolve the problem.

A critical error according to the invention is an operating system error which causes the machine to reboot.

In further embodiments which do not form part of the invention, instead of only restoring the blocked file that was last accessed, the FS Filter 2 can restore any combination of (i) all files accessed from a certain time before when the critical error occurred, (ii) all files that were added to the blocked file list 14 since the last successful start of the application creating the error, (iii) all files that were added to the blocked file list 14 since a certain time or date, (iv) all files that were added to the blocked file list 14 since the machine 12 was restarted, and (v) all files in the blocked file list 14. Restoring multiple files simultaneously, instead of restarting the application after each unsuccessful attempt to run the application, lowers the number of critical errors occurring on the machine. In each case, the FS Filter 2 alerts the user 8 or security software 10 protecting the machine 12 about which files were restored to correct the critical error. If security software 10 is alerted about restored files, the security software 10 can run the restored files in a limited capacity to ensure they do not include malware.

To increase space, the deletion process can be finalized, removing the files from the blocked file list. Final deletion occurs after the FS Filter 2 receives a request from a user 8 that the files be permanently deleted. Alternatively, the final deletion occurs after a certain amount of time passes without a critical error being generated. For example, if the machine reboots and the operating system restarts successfully then the file 6 would be actually deleted from the machine's hard drive.

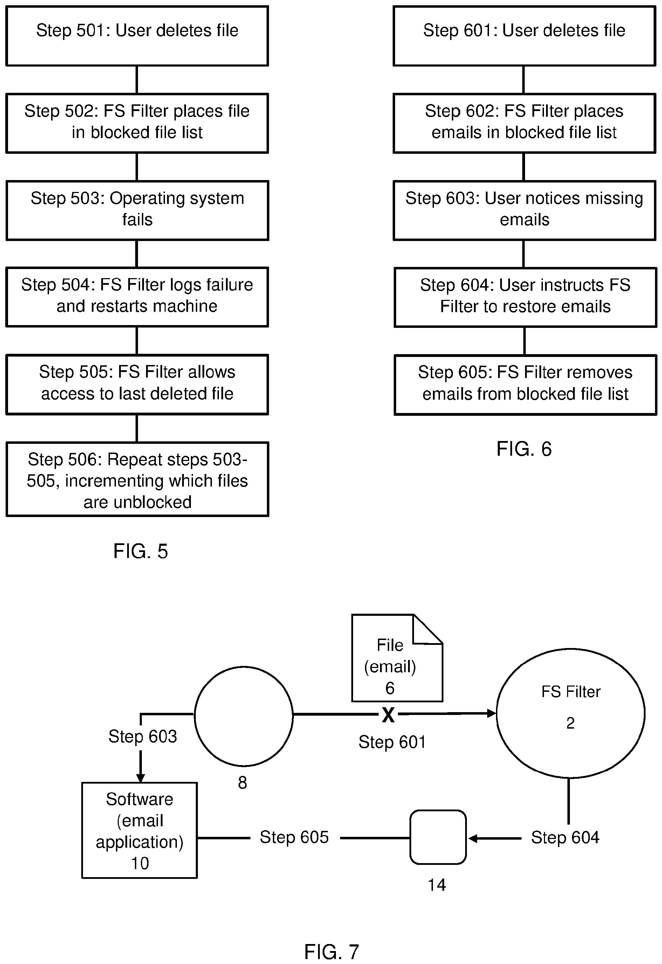

A separate embodiment, which does not form part of the invention, is shown in Fig. 5. In step 501, the user 8 deletes a file 6 that happens to be a system file. In step 502, the file 6 is placed in the blocked file list 14. In step 503, the deleted file causes the operating system to fail. This failure is logged by the FS Filter 2. In steps 504, the machine 12 restarts and determines that the previous restart failed to complete successfully. In step 505, the machine 12 attempts to restart again allowing access to the just deleted file 6. In step 506, the operating system again fails, and the machine restarts. The FS Filter 2 then allows access to even more files. This process is repeated as many times as necessary until the machine is operational again.

In an alternate embodiment, which does not form part of the invention, depicted in a Fig 6 and 7, a user 8 deletes his email inbox. In step 602, the FS Filter 2 places the file 6 in the blocked file list 14, and the FS Filter 2 denies access to the deleted file 6. In step 603, when the user 8 tries to open his email, any of the following might occur: the user notices the missing emails, receives an error from the email application about the missing item, or the application crashes. In step 604, the user 8 realizes the mistake and instructs the FS Filter 2 to remove the file 6 from the blocked file list 14. The FS Filter 2 removes the access restrictions, allowing the user to operate their email application in the same state as before the deletion.

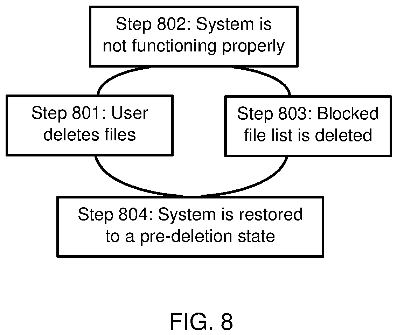

In an alternate embodiment, which does not form part of the invention, shown in Fig 8, the entire list of files that are being blocked is cleared or deleted when an error is encountered, allowing the system to quickly be restored to a pre-deletion state.

## Claims

1. A method of protecting a machine (12) comprising an operating system and a file system filter (2), whereby the file system filter carries out the steps of:
a. intercepting attempts to access files (103), and blocking access to files which are found on a blocked file list (14) (104) (105);
b. intercepting an instruction to delete a file on the machine (101);
c. making the file inaccessible by placing it on the blocked file list (14) (102) instead of deleting the file,
d. determining that a critical operating system error which causes the machine to reboot has occurred (401) (402); and
if such an error has occurred then (i) while the operating system restarts, allowing access to all files and monitoring which files are accessed that are also listed on the blocked file list (403) (404), and (ii) once the operating system successfully restarts, removing the files accessed during the restart from the blocked file list (405) (406).

2. A method according to Claim 1, where the intercepting an instruction to delete a file occurs when an application (10) accesses a file system filter driver using an API function.

3. A method according to Claim 1, where the blocked file is listed in a database (14).

4. A method according to Claim 1, where the instruction to delete the file is sent by other software (10) running on the machine.

5. A system for protecting a machine comprising
a. a machine (12), said machine comprising:
b. an operating system, and
c. a file system filter (2) with means to carry out the method of any one of claims 1-4.

## Patentansprüche

1. Verfahren zum Schützen einer Maschine (12), die ein Betriebssystem und einen Dateisystemfilter (2) umfasst:
wobei der Dateisystemfilter die folgenden Schritte ausführt:
a. Abfangen von Versuchen, auf Dateien zuzugreifen, (103) und Blockieren eines Zugriffs auf Dateien, die auf einer Liste von blockierten Dateien (14) zu finden sind (104) (105);
b. Abfangen eines Befehls zum Löschen einer Datei in der Maschine (101);
c. unzugänglich Machen der Datei, indem sie auf die Liste der blockierten Dateien (14) gesetzt wird (102), anstatt die Datei zu löschen,
d. Ermitteln, dass ein kritischer Betriebssystemfehler aufgetreten ist, der veranlasst, dass die Maschine neu gebootet wird (401) (402); und
wenn ein solcher Fehler aufgetreten ist: (i) während das Betriebssystem neu gestartet wird, Erlauben eines Zugriffs auf alle Dateien und Überwachen, auf welche Dateien zugegriffen wird, die sich auch auf der Liste der blockierten Dateien befinden (403) (404), und (ii) sobald das Betriebssystem erfolgreich neu gestartet wurde, Entfernen der Dateien von der Liste der blockierten Dateien, auf die während des Neustarts zugegriffen wurde (405) (406).

2. Verfahren nach Anspruch 1, wobei das Abfangen eines Befehls zum Löschen einer Datei auftritt, wenn eine Anwendung (10) mithilfe einer API-Funktion auf einen Dateisystemfiltertreiber zugreift.

3. Verfahren nach Anspruch 1, wobei die blockierte Datei ist einer Datenbank (14) aufgelistet wird.

4. Verfahren nach Anspruch 1, wobei der Befehl zum Löschen der Datei von einer anderen Software (10) gesendet wird, die auf der Maschine abläuft.

5. System zum Schützen einer Maschine, umfassend:
a. eine Maschine (12), wobei die Maschine umfasst:
b. ein Betriebssystem und
c. einen Dateisystemfilter (2) mit einem Element zum Ausführen des Verfahrens nach einem der Ansprüche 1 bis 4 .

## Revendications

1. Procédé de protection d'une machine (12) comprenant un système d'exploitation et un filtre de système de fichiers (2), où le filtre de système de fichiers met en œuvre les étapes consistant à :
a. intercepter des tentatives d'accès aux fichiers (103), et bloquer l'accès aux fichiers qui sont trouvés sur une liste de fichiers bloqués (14) (104) (105) ;
b. intercepter une instruction d'effacer un fichier sur la machine (101) ;
c. rendre le fichier inaccessible en le plaçant sur la liste de fichiers bloqués (14) (102) au lieu d'effacer le fichier,
d. déterminer qu'une erreur de système d'exploitation critique qui amène la machine à redémarrer s'est produite (401) (402) ; et
si une telle erreur s'est produite, alors (i) pendant que le système d'exploitation redémarre, permettre un accès à tous les fichiers et surveiller à quels fichiers on a accès qui sont également listés sur la liste de fichiers bloqués (403) (404), et (ii) une fois que le système d'exploitation a réussi à redémarrer, supprimer les fichiers auxquels on a accédé pendant le redémarrage de la liste de fichiers bloqués (405) (406).

2. Procédé selon la revendication 1, où l'interception d'une instruction d'effacer un fichier se produit lorsqu'une application (10) accède à un pilote de filtre du système de fichiers à l'aide d'une fonction API.

3. Procédé selon la revendication 1, où le fichier bloqué est listé dans une base de données (14).

4. Procédé selon la revendication 1, où l'instruction d'effacer le fichier est envoyée par un autre logiciel (10) fonctionnant sur la machine.

5. Système de protection d'une machine comprenant :
a. une machine (12), ladite machine comprenant :
b. un système d'exploitation, et
c. un filtre de système de fichiers (2) ayant les moyens de mettre en œuvre le procédé selon l'une quelconque des revendications 1 à 4.
